# FASCICULE DE BREVET EUROPEEN

(11) **EP 2 721 598 B1**
(45) Date de publication et mention de la délivrance du brevet: **10.08.2016**
(21) Numéro de dépôt: 12720500.3
(22) Date de dépôt: 11.05.2012
(51) Int. Cl.: G09G 3/36, G02F 1/1343

(54) **AFFICHEUR A CRISTAL LIQUIDE A ELECTRODES D'EFFACEMENT**
FLÜSSIGKRISTALLANZEIGE MIT LÖSCHELEKTRODEN
LIQUID CRYSTAL DISPLAY COMPRISING ERASE ELECTRODES

(30) Priorité: 20.06.2011 FR 1155391
(43) Date de publication de la demande: 23.04.2014
(73) Titulaire: Commissariat à l'Énergie Atomique et aux Énergies Alternatives, 75015 Paris (FR)
(72) Inventeur: ROSSINI, Umberto, F-38500 Coublevie (FR)
(74) Mandataire: Bréda, Jean-Marc
(86) Numéro de dépôt international: PCT/EP2012/058774
(87) Numéro de publication internationale: WO 2012/175250

(56) Documents cités:
- US-A1- 2005 088 600
- US-A1- 2005 105 033
- US-A1- 2007 040 783
- US-A1- 2007 252 938
- US-A1- 2008 001 873
- US-A1- 2010 020 283

## Description

L'invention concerne les afficheurs à cristaux liquides à matrice active. Elle s'applique principalement aux écrans à base de cellules transmissives et notamment aux écrans de petites dimensions, réalisés par exemple à partir de substrats de silicium (technologie LCOS de l'anglais "Liquid Crystal on Silicon") ; elle s'applique tout particulièrement à l'affichage en mode séquentiel couleur, pour l'observation directe ou pour la projection.

Un afficheur à matrice active comprend habituellement une matrice de lignes et colonnes de pixels, chaque pixel comportant une cellule à cristal liquide, une électrode de pixel qui reçoit une tension correspondant à une information de luminance, et une contre-électrode qui définit un potentiel de référence (pouvant varier d'une trame d'image à la suivante pour alterner le sens des champs électriques appliqués). La tension appliquée entre l'électrode de pixel et l'électrode commune produit un champ électrique qui oriente les molécules du cristal liquide en fonction du module du champ. Cette orientation agit sur la polarisation de la lumière qui traverse le cristal de manière à définir, en combinaison avec l'usage de polariseurs, un niveau de transmission de lumière qui dépend du champ électrique appliqué. Un transistor de commande (l'élément actif du pixel) relie l'électrode de pixel de tous les pixels d'une même colonne à un conducteur de colonne respectif. Le conducteur de colonne reçoit à un moment donné une tension analogique définissant un niveau de gris à appliquer au pixel ; si le transistor est conducteur, cette tension est appliquée à l'électrode de pixel ; sinon, le pixel se comporte comme une capacité isolée et conserve le niveau de tension reçu précédemment. Les transistors de commande d'une même ligne de pixels sont commandés par un conducteur de ligne respectif ; ainsi, pendant l'écriture d'une trame d'image, on adresse successivement les différentes lignes de la matrice pour écrire à un instant donné dans chacun des pixels de la ligne adressée l'information de niveau de luminance appliquée à cet instant par un conducteur de colonne associé à ce pixel. L'information écrite dans les pixels d'une ligne est maintenue capacitivement pendant l'écriture des pixels des autres lignes puis pendant tout le reste d'une trame d'image. Une capacité de stockage peut être placée en parallèle entre les électrodes du pixel pour aider à ce maintien capacitif.

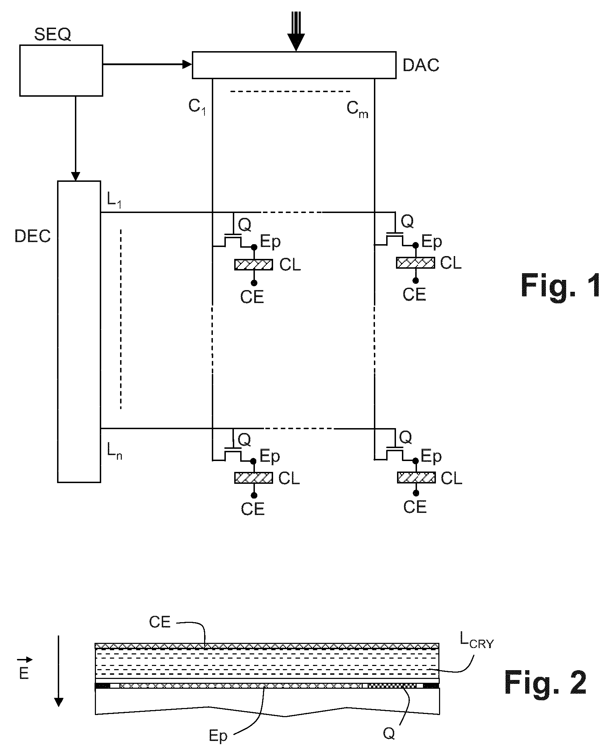

La figure 1 représente la structure générale d'une telle matrice, où CL désigne une cellule à cristal liquide et Q désigne le transistor associé à cette cellule, l'ensemble de la cellule et du transistor formant le pixel. La contre-électrode de la cellule est désignée par CE, l'électrode du pixel est désignée par Ep. Les conducteurs de commande en ligne sont désignés par L₁ à Lₙ pour une matrice de n lignes. Les conducteurs de colonne sont C₁ à Cₘ pour une matrice de m colonnes. Un décodeur de ligne DEC adresse successivement les différentes lignes. Un circuit de conversion numérique-analogique DAC applique aux conducteurs de colonne pendant l'adressage d'une ligne un ensemble de tensions analogiques représentant l'image à afficher par cette ligne. Le circuit de conversion établit ces tensions analogiques à partir d'un signal numérique. Un circuit de séquencement SEQ assure le fonctionnement synchronisé du décodeur de ligne et du circuit de conversion DAC.

Dans la plupart des afficheurs à cristaux liquides, le cristal liquide est placé entre un plan qui contient la contre-électrode et un plan qui contient l'électrode de pixel et le transistor de commande. La contre-électrode est commune à tous les pixels de la matrice et recouvre toute la matrice. Les électrodes de pixel recouvrent chacune une grande partie du pixel. L'électrode de pixel et la contre-électrode sont transparentes (en oxyde d'indium-étain ITO) dans le cas d'un afficheur transmissif ; l'une des deux est réfléchissante dans le cas d'un afficheur réflexif. Le champ électrique appliqué est perpendiculaire au plan de l'afficheur. Au repos, c'est-à-dire en l'absence de ce champ les molécules tendent à être orientées dans le plan (ou respectivement perpendiculairement à ce plan, selon le type de molécule). En présence d'un champ électrique, leur orientation évolue pour devenir perpendiculaire (respectivement parallèle) au plan.

L'utilisation d'oxyde d'indium-étain implique des opérations de fabrication coûteuses ; le matériau est coûteux ; en outre ce matériau a un indice optique élevé (presque égal à 2) et provoque des réflexions indésirables donc des pertes de lumière ; enfin, il n'est pas parfaitement transparent, notamment dans les longueurs d'onde vertes où l'oeil est particulièrement sensible ; on ne peut pas réduire trop son épaisseur pour le rendre plus transparent car il faut qu'il reste suffisamment conducteur pour établir uniformément le champ électrique désiré.

Pour éviter les inconvénients de l'oxyde d'indium-étain, on a déjà proposé des afficheurs dans lesquels le champ électrique appliqué est dans le plan de l'afficheur et non perpendiculaire à ce plan. Ces afficheurs sont dits afficheurs à commutation dans le plan (en anglais "In-Plane Switching"). Au repos, les molécules sont orientées par exemple dans une direction Ox de ce plan ; lorsqu'un champ électrique est appliqué dans une direction Oy différente de Ox mais toujours dans le même plan, les molécules du cristal liquide tendent à tourner dans le plan et à s'orienter dans la direction Oy. La polarisation de la lumière qui résulte de cette rotation des molécules est modifiée. Des polariseurs en amont et en aval permettent de moduler l'intensité de lumière qui traverse l'afficheur en proportion des variations d'orientation des molécules.

Dans ces afficheurs, le champ électrique est appliqué entre deux électrodes situées dans le plan de l'afficheur. Les contre-électrodes sont placées le long des bords du pixel. Si les pixels sont de petites dimensions (quelques micromètres de côté), une seule électrode placée au milieu de l'intervalle entre les contre-électrodes suffit pour établir un champ électrique apte à faire tourner les molécules avec une tension raisonnablement faible (quelques volts). Pour des pixels de plus grande dimension on peut interdigiter des électrodes de pixels et des contre-électrodes pour établir ce champ. Les électrodes et contre-électrodes n'ont pas besoin d'être transparentes car elles n'occupent qu'une fraction de la surface du pixel. Elles peuvent être réalisées avant mise en place du cristal liquide en utilisant un métal non transparent classiquement utilisé dans les technologies de micro-électronique (aluminium, cuivre, etc.).

Les afficheurs à commutation dans le plan sont par ailleurs meilleurs du point de vue de l'angle de vue sous lesquels on peut les regarder. Ceci vient du fait que l'ellipsoïde des indices des molécules utilisées est orienté avec son grand axe dans le plan aussi bien au repos que lorsqu'un champ électrique est appliqué ; les variations de retard optique de la lumière en fonction de l'angle de vue sont moins importantes que lorsque les molécules ont leur ellipsoïde d'indice orienté verticalement (comme c'est le cas pour les afficheurs classiques à commutation par un champ électrique perpendiculaire au plan).

Cependant, un inconvénient des afficheurs à commutation dans le plan est le fait que les forces de rappel qui s'exercent sur les molécules pour les ramener à leur position de repos après suppression du champ électrique ne sont pas très élevées. La raison en est que seules les forces de torsion latérale ("twist" en anglais) agissent mais non les forces d'écartement en éventail ("splay" en anglais) ou les forces de courbure ("bend" en anglais) qui s'exercent dans le cas des rotations en dehors du plan.

Il en résulte une limitation dans la rapidité avec laquelle on peut passer d'une image à une autre.

Ce défaut est particulièrement sensible si l'afficheur doit fonctionner en mode séquentiel couleur. On rappelle que ce mode consiste à afficher successivement sur une même matrice à cristaux liquides trois images correspondant aux trois couleurs primaires à afficher et à illuminer la matrice par une source d'une couleur primaire en synchronisme rigoureux avec l'affichage de l'image correspondant à cette couleur. Le mode séquentiel couleur est avantageux car il évite d'avoir trois matrices différentes pour afficher les trois couleurs ou d'avoir une mosaïque de filtres colorés sur une seule matrice. Mais en contrepartie, pour un affichage d'images en couleur à une cadence déterminée (24 images par seconde par exemple) il faut que la matrice affiche des images partielles à une cadence trois fois plus grande (72 images par seconde).

Un but de l'invention est de proposer un afficheur à matrice active, à commutation dans le plan, qui affiche des images à une cadence rapide et qui est utilisable notamment pour un fonctionnement en mode séquentiel couleur.

On notera qu'on a déjà proposé (US2007/0252938), d'adjoindre à chaque pixel deux électrodes supplémentaires et trois transistors supplémentaires. Les électrodes supplémentaires servent tour à tour d'électrodes de pixel pour afficher un niveau de gris et d'électrode d'effacement pour supprimer ce niveau. Ce dispositif n'est pas adapté à un mode séquentiel couleur, il est adapté pour un écran de téléviseur à balayage ligne par ligne.

L'invention propose un afficheur à cristal liquide comprenant une matrice de rangées horizontales et verticales de pixels et, pour chaque pixel, une cellule à cristal liquide (CL), une électrode de pixel (Ep) commandée par un transistor de commande (Q) et au moins deux contre-électrodes (CE) situées du même côté du cristal liquide que l'électrode de pixel, le cristal liquide étant composé de molécules ayant une orientation naturelle de repos dans le plan de l'afficheur en l'absence de tension entre l'électrode de pixel et les contre-électrodes et une autre orientation dans le plan de l'afficheur en présence d'une tension entre l'électrode de pixel et les contre-électrodes, cet afficheur comportant en outre un réseau d'électrodes d'effacement (EFj) et des moyens pour appliquer entre deux électrodes d'effacement voisines, pendant une phase d'effacement, un champ électrique d'effacement dans un sens tendant à ramener les molécules du cristal liquide vers leur orientation de repos, les contre-électrodes étant parallèles à l'électrode de pixel et communes à tous les pixels d'une rangée horizontale, caractérisé en ce que chaque électrode d'effacement s'étend le long d'une rangée verticale de pixels et est commune aux pixels de cette rangée verticale, et en ce que l'afficheur comporte des moyens pour afficher des trames d'image successives, chaque trame comprenant :- une phase d'effacement pendant laquelle une différence de potentiel est appliquée entre deux électrodes d'effacement encadrant un pixel ; - une phase d'écriture d'image, pendant laquelle les électrodes d'effacement sont maintenues en haute impédance, les contre-électrodes sont maintenues à un potentiel de référence, et une tension analogique représentant la luminance est appliquée à l'électrode de pixel, - et une phase de maintien pendant laquelle les électrodes d'effacement, l'électrode de pixel sont placées en haute impédance, et les contre-électrodes sont maintenues au potentiel de référence.

L'électrode d'effacement est de préférence située du même côté du cristal liquide que les autres électrodes. Cette configuration permet d'éviter que la plaque (par exemple en verre) qui va encapsuler le cristal liquide du côté opposé au substrat comportant la matrice active, ne subisse des étapes technologiques nécessitant des alignements ; on réduit ainsi significativement le coût de réalisation. L'électrode d'effacement est réalisée avec la matrice active de préférence sur un substrat de silicium dont la partie utile (comportant la matrice active et l'électrode d'effacement) est ensuite reportée, selon les techniques usuelles liées aux cellules transmissives standard, sur un substrat de verre qui servira de support au cristal liquide.

Il y a de préférence deux électrodes d'effacement pour chaque rangée verticale de pixels, une de chaque côté du pixel, et le champ électrique d'effacement est établi en portant à des potentiels différents les deux électrodes d'effacement qui encadrent le pixel. Les électrodes d'effacement sont alors de préférence partagées entre deux pixels adjacents, c'est-à-dire qu'une électrode d'effacement située d'un côté du pixel sert également d'électrode d'effacement pour le pixel adjacent. Les contre-électrodes sont également situées de chaque côté du pixel et elles sont partagées entre deux pixels adjacents. On peut cependant aussi prévoir que les électrodes d'effacement sont moins nombreuses que les rangées verticales de pixels, par exemple une électrode toutes les deux rangées si le champ électrique qu'elles produisent entre elles est suffisamment fort pour agir sur les molécules de deux pixels adjacents.

De préférence, les électrodes d'effacement sont réunies électriquement en deux groupes d'électrodes interdigitées, pour un effacement commun de toute la matrice, un champ électrique s'établissant entre deux électrodes voisines appartenant l'une au premier groupe, l'autre au deuxième groupe. Par exemple, s'il y a autant d'électrodes que de rangées verticales de pixels, une électrode associée à une rangée paire appartient au premier groupe et une électrode associée à une rangée impaire appartient au deuxième groupe.

Les électrodes d'effacement, comme les électrodes de pixel et les contre-électrodes n'ont pas besoin d'être en oxyde d'indium-étain, elles peuvent être en métal conducteur non transparent ou même opaque tel que du cuivre ou de l'aluminium.

Les contre-électrodes sont parallèles aux lignes ou aux colonnes de pixels, c'est-à-dire que les rangées horizontales peuvent être des lignes ou des colonnes, les rangées verticales étant réciproquement des colonnes ou des lignes ; le mot ligne est ici associé à une notion d'adressage (il y a des conducteurs d'adressage en ligne) et le mot colonne est associé à une notion d'application des données de luminance : des niveaux de tension représentant la luminance arrivent par des conducteurs de colonne. De préférence, les électrodes d'effacement sont perpendiculaires aux contre-électrodes, ou bien à la direction d'orientation des molécules au repos. Une électrode d'effacement est commune à tous les pixels d'une même rangée.

Les électrodes d'effacement, les électrodes de pixel et les contre-électrodes sont de préférence réalisées dans un niveau de métal conducteur le plus proche possible du cristal liquide pour que l'action des champs électriques qu'elles engendrent soit la plus efficace possible. Les conducteurs de ligne et de colonne de la matrice peuvent être réalisés dans des niveaux plus éloignés. Si les électrodes d'effacement et les contre-électrodes sont réalisées dans un même niveau de métal conducteur, les croisements entre ces électrodes (qui ne doivent pas se toucher) peuvent se faire en utilisant des vias et des niveaux conducteurs plus éloignés du cristal liquide.

On peut avantageusement prévoir que l'orientation des molécules de cristal liquide au repos est légèrement tiltée (c'est-à-dire décalée angulairement) par rapport à la direction de l'électrode de pixel et de la contre-électrode, afin de favoriser un sens de rotation déterminé des molécules lorsqu'on applique un champ électrique d'écriture. L'inclinaison ou "tilt" est donnée par frottage de la surface d'une des parois enfermant le cristal liquide. L'inclinaison est de préférence inférieure à 20°, de préférence entre 5° à 15°, de préférence égale à 10 ° ou proche de 10°.

L'afficheur comporte de préférence en outre des moyens pour maintenir l'électrode de pixel et les contre-électrodes en haute impédance pendant au moins une partie de la phase d'effacement.

La phase d'effacement peut comprendre au moins deux étapes pour commander les électrodes d'effacement de deux rangées verticales adjacentes en au moins deux phases de manière à établir un champ électrique d'effacement de sens alterné entre ces électrodes pendant une phase d'effacement.

L'électrode d'effacement est de préférence superposée à un conducteur d'adressage en ligne du pixel ou à un conducteur de colonne fournissant une donnée de luminance à affecter au pixel ; cela permet de masquer le moins possible la surface d'ouverture optique du pixel. Les contre-électrodes sont de la même manière superposées à un conducteur de colonne (si l'électrode d'effacement est superposée à un conducteur d'adressage en ligne) ou à un conducteur d'adressage en ligne (si l'électrode d'effacement est superposée à un conducteur de colonne).

L'afficheur est de préférence un petit afficheur réalisé en technologie LCOS à partir d'une tranche semiconductrice permettant la fabrication collective d'une multiplicité d'afficheurs simultanément selon des techniques de fabrication de circuits intégrés. Les pixels ont de préférence une surface de 10 à 100 micromètres carrés. Le fonctionnement est de préférence le mode séquentiel couleur, c'est-à-dire que l'afficheur comprend des moyens de synchronisation de la matrice active par rapport à la commande d'allumage et d'extinction de sources lumineuses colorées éclairant la matrice. L'afficheur est de préférence de type transmissif. C'est de préférence un afficheur destiné à la projection d'image ; ce peut être aussi un afficheur destiné à l'observation directe.

D'autres caractéristiques et avantages de l'invention apparaîtront à la lecture de la description détaillée qui suit et qui est faite en référence aux dessins annexés dans lesquels :
- la figure 1 déjà décrite représente le schéma électrique de principe d'un afficheur matriciel à cristaux liquides ;
- la figure 2 représente en coupe verticale une structure classique de pixel à commutation par un champ électrique perpendiculaire au plan ;
- la figure 3 représente en vue de dessus un arrangement de pixel à commutation par un champ électrique dans le plan ;
- la figure 4 représente la rotation des molécules de cristal liquide dans le plan en présence d'un champ électrique perpendiculaire à la direction des molécules au repos ;
- la figure 5 représente une structure de pixel selon l'invention pourvue d'électrodes d'effacement ;
- la figure 6 représente l'action d'une phase d'écriture d'image sur les molécules du cristal liquide ;
- la figure 7 représente l'action d'une phase d'effacement ;
- la figure 8 représente l'état final des molécules après la fin d'une phase d'effacement ;
- la figure 9 représente l'orientation préférentielle des polariseurs croisés encadrant la matrice de pixels à cristal liquide ;
- la figure 10 représente en coupe verticale la position des électrodes au plus près du cristal liquide ;
- la figure 11 représente un diagramme temporel de fonctionnement de l'afficheur en mode séquentiel couleur.

Bien que l'invention s'applique à des afficheurs à cellules transmissives de tout type (à vision directe ou non, monochrome ou couleur, avec ou sans filtres colorés), on considérera dans la suite que l'afficheur est de type couleur fonctionnant en mode séquentiel couleur. Dans ce qui suit on utilisera l'appellation "trame" pour définir l'écriture d'une image complète d'une seule couleur sur l'écran ; trois trames successives correspondent à trois couleurs différentes en mode séquentiel couleur.

On ne reviendra pas sur les explications données à propos de la figure 1, qui restent valables pour ce qui suit.

Dans les structures les plus habituelles d'afficheurs, telles que celle représentée en coupe sur la figure 2, une couche plane de cristal liquide L_{CRY} est enfermée entre deux électrodes planes parallèles Ep (électrode de pixel) et CE (contre-électrode commune à tous les pixels). Les électrodes Ep et CE sont en oxyde d'indium-étain, pour être transparentes, si l'afficheur est de type transmissif. Le champ électrique E qui oriente les molécules du cristal liquide pour établir une information de luminance est vertical, c'est-à-dire perpendiculaire au plan de la couche de cristal liquide qui est le plan de la matrice de pixels. En l'absence de champ électrique, les molécules ont une position de repos, par exemple horizontale, c'est-à-dire parallèle au plan du cristal liquide ; en présence d'un champ électrique, elles tendent à s'orienter verticalement d'autant plus que le champ est plus fort.

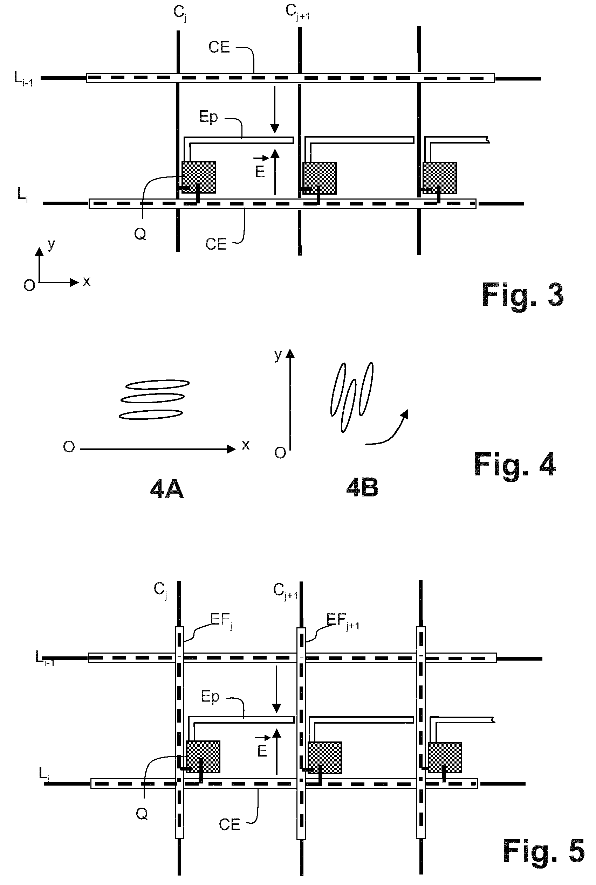

Par opposition à ce type de structure, on considère ici une structure d'afficheur telle que celle qui est représentée en vue de dessus à la figure 3, dans laquelle le champ électrique E qui oriente les molécules est un champ horizontal, dans le plan de la matrice. Ce champ est produit par la différence de potentiel entre l'électrode de pixel et la contre-électrode, toutes deux étant situées dans un même plan et d'un même côté du cristal liquide. Ce type de construction est possible en particulier pour des pixels de petites dimensions, en particulier des pixels dont les dimensions latérales sont du même ordre que l'épaisseur de cristal liquide, c'est-à-dire quelques micromètres.

En l'absence de champ électrique les molécules ont une orientation au repos dans une direction dans le plan de l'afficheur ; cette orientation est dictée par leur constitution physique et par le sens du frottement appliqué à l'une des parois qui enferment le cristal liquide. On considère comme axe d'orientation l'axe de plus grand indice de l'ellipsoïde des indices de réfraction du cristal liquide. En présence d'un champ électrique ayant une composante dans une direction perpendiculaire à la direction de repos, les molécules subissent une rotation dans le plan du cristal liquide et tendent à s'orienter perpendiculairement à la position de repos, d'autant plus que le champ est plus fort. Des polariseurs croisés permettent de transformer ce changement d'orientation en changement de coefficient de transmission lumineuse.

Pour produire ce champ, on prévoit une électrode de pixel Ep allongée dans une direction Ox du plan, qui est la direction d'orientation des molécules au repos ou proche de la direction au repos, et deux contre-électrodes CE, une de chaque côté du pixel, parallèles à l'électrode de pixel Ep. On pourrait avoir plusieurs électrodes de pixel parallèles les unes aux autres, interdigitées avec plusieurs contre-électrodes, mais dans ce qui suit on considérera seulement une électrode Ep passant au milieu de l'intervalle entre les deux contre-électrodes CE.

Dans l'exemple de la figure 3, l'électrode de pixel Ep est constituée par une bande conductrice étroite parallèle aux contre-électrodes à mi-distance entre les deux contre-électrodes de manière qu'un champ électrique de même amplitude soit appliqué de part et d'autre de l'électrode. Le cristal liquide est sensible à l'amplitude mais pas au sens du champ électrique et par conséquent il n'est pas gênant que le sens du champ soit inversé de part et d'autre de l'électrode Ep.

La figure 4 montre schématiquement l'orientation des molécules de cristal liquide au repos (4A) dans une direction proche de la direction Ox et en présence d'un champ électrique selon la direction Oy entre l'électrode de pixel et les contre-électrodes. En présence d'un champ électrique les molécules tournent dans le plan, l'angle moyen de rotation des molécules du pixel étant lié à l'amplitude du champ électrique.

Les électrodes de pixel Ep et les contre-électrodes peuvent être en matériau non transparent (cuivre ou aluminium par exemple), à condition d'être les plus étroites possibles pour ne pas masquer trop la lumière. On sait réaliser des bandes conductrices de 0,2 micromètre de large dans des afficheurs en technologie LCOS dont les pixels font quelques micromètres de côté. Une technologie damascène d'incrustation de cuivre est bien adaptée à cela. Les contre-électrodes sont alors de préférence situées au-dessus des conducteurs de ligne Lᵢ, Lᵢ₊₁ (qui permettent l'adressage séquentiel des lignes), de manière à limiter le masquage de la lumière; elles pourraient également être situées au-dessus des conducteurs de colonne Cⱼ (qui amènent le niveau de gris) plutôt que plutôt que sur les conducteurs de ligne Lᵢ. Dans ce qui suit on considérera que les électrodes de pixel et les contre-électrodes sont orientées dans la direction Ox parallèlement aux "rangées" horizontales de pixel, le mot "rangée" désignant indifféremment un alignement de pixels dans le sens des lignes d'adressage ou un alignement de pixels dans le sens des colonnes d'amenée des signaux de niveaux de gris. Les contre-électrodes sont communes à tous les pixels d'une rangée horizontale, c'est-à-dire qu'elles s'étendent sur toute la longueur de la rangée.

La figure 5 représente en vue de dessus la structure générale des pixels d'un afficheur selon l'invention. La description de la figure 3 reste applicable à la figure 5 mais la figure 5 se différencie de la figure 3 en ce qu'on a rajouté des électrodes dites d'effacement ; elles sont de préférence (mais pas obligatoirement comme on le verra) perpendiculaires à la direction des électrodes de pixel et des contre-électrodes ; chaque électrode d'effacement est commune à tous les pixels d'une rangée verticale et s'étend tout le long de cette rangée.

Dans le cas de la figure 5, les électrodes de pixel et contre-électrodes (rangées horizontales) sont parallèles à la direction des lignes de pixels et les électrodes d'effacement (rangées verticales) sont parallèles aux colonnes de pixels mais l'inverse serait possible.

Les électrodes d'effacement EFⱼ, EFⱼ₊₁ sont disposées au-dessus des conducteurs de colonne de manière à masquer le moins possible la lumière. Les électrodes d'effacement sont en effet opaques car on souhaite éviter d'utiliser des conducteurs en oxyde d'indium-étain ; elles sont en pratique en cuivre ou en aluminium comme les électrodes de pixel et contre-électrodes. Les électrodes d'effacement s'étendent tout le long des conducteurs de colonne : elles sont communes à toute une rangée de pixels en colonne. Elles servent à appliquer un champ électrique d'effacement dans la direction Ox des lignes afin de ramener les molécules de cristal liquide dans cette direction après qu'elles en aient été écartées plus ou moins lors d'une phase d'écriture précédente. Pour établir ce champ électrique d'effacement, on applique des potentiels différents (par exemple deux potentiels opposés) aux deux électrodes d'effacement EFⱼ et EFⱼ₊₁ qui encadrent une colonne de pixels de rang j. Les électrodes d'effacement sont partagées entre les pixels adjacents, c'est-à-dire qu'une électrode d'effacement située sur un bord de pixel sert aussi à l'autre pixel adjacent à ce bord.

Il est préférable d'avoir autant d'électrodes d'effacement qu'il y a de rangées verticales de pixels mais ce n'est pas obligatoire. Il n'est même pas nécessaire que le pas des électrodes d'effacement soit le même que le pas des pixels ou un multiple ou sous-multiple de ce pas. Cependant la solution avec un pas égal à celui des pixels permet de disposer les électrodes d'effacement juste au-dessus ou au-dessous des conducteurs de ligne ou de colonne ; cela évite de réduire l'ouverture optique des pixels par la présence d'électrodes d'effacement, surtout si celles-ci sont opaques.

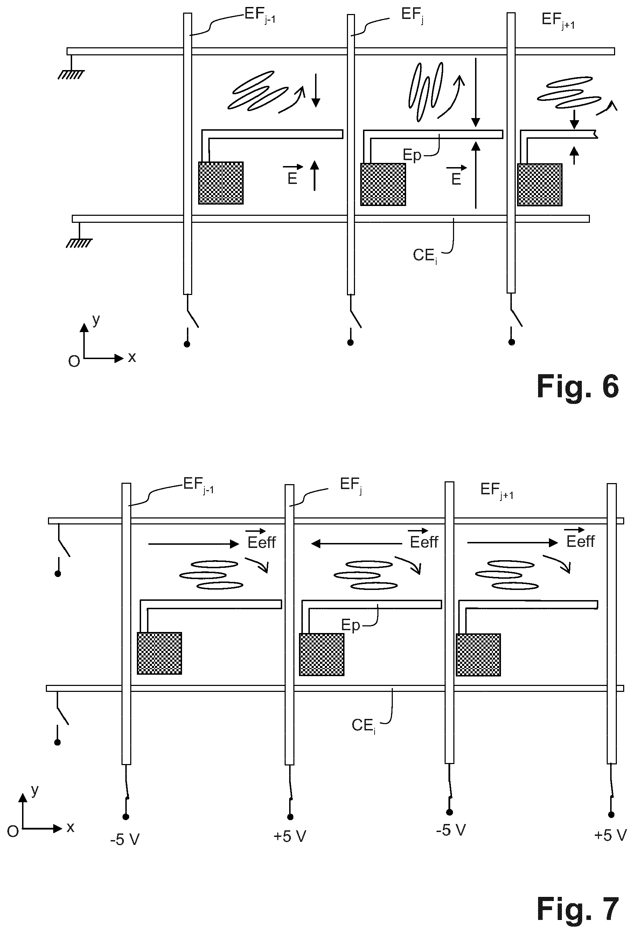

Les figures 6 et 7 représentent un schéma de structure simplifié analogue à celui de la figure 5, mais dans lequel les conducteurs de ligne et de colonne ne sont pas représentés pour faciliter la lisibilité, étant rappelé que de toute façon les conducteurs de ligne peuvent être orientés soit dans la direction Ox soit dans la direction Oy, les conducteurs de colonne étant dans l'autre direction. La figure 6 indique les potentiels appliqués aux électrodes pendant une phase d'écriture d'une information de luminance et de maintien de l'information de luminance ; la figure 7 indique les potentiels appliqués pendant une phase d'effacement précédant une nouvelle écriture.

Sur les figures 6 et 7 on a représenté symboliquement sous forme d'ovales l'orientation générale des molécules de cristal liquide pendant ces phases. Il s'agit d'une orientation moyenne : en effet, le cristal liquide se situe entre deux parois dont l'une (de préférence la paroi du côté d'entrée de la lumière) est frottée de manière à imposer l'orientation au repos des molécules (en l'absence de champ électrique). Le plan est frotté de préférence dans le sens des contre-électrodes (direction Ox sur les figures 6 et 7) ou, comme on le verra, avec un petit angle d'inclinaison par rapport à la direction Ox ; le champ électrique d'écriture est dans la direction perpendiculaire Oy et il est plus ou moins intense selon le niveau de signal de luminance appliqué au pixel.

Les orientations différentes représentées pour les trois pixels de la figure 6 signifient que les niveaux de signal de luminance appliqués aux trois pixels sont différents.

Classiquement, des polariseurs croisés encadrent la matrice de pixels : un polariseur entrant et un analyseur de sortie. On reviendra plus loin sur ce point.

Pendant la phase d'écriture d'une ligne (figure 6) et pendant la phase de maintien qui suit l'écriture et qui dure tout le reste de la trame, les contre-électrodes CE sont toutes à un potentiel de référence qui peut être la masse ou qui peut alterner d'une trame à la suivante entre un potentiel bas Vmin (négatif) et un potentiel haut Vmax (positif). Cette commutation de potentiel de référence permet d'inverser périodiquement le sens des champs électriques d'écriture pour éviter des phénomènes de polarisation permanente du cristal liquide. Pendant la phase d'écriture et la phase de maintien, les électrodes d'effacement sont laissées en haute impédance pour ne pas engendrer de champ électrique parasite qui perturberait l'écriture ou le maintien de l'image écrite.

Pendant la phase d'effacement (figure 7), une électrode d'effacement reçoit un potentiel d'effacement bas et les électrodes adjacentes reçoivent un potentiel d'effacement haut, de manière à appliquer un champ électrique dans la direction Ox. Le potentiel bas peut être la masse et le potentiel haut peut être un potentiel d'alimentation positif Vdd, mais on peut aussi prévoir un potentiel négatif (par exemple -5volts) et un potentiel positif opposé (par exemple +5 volts). C'est ce qui est représenté sur la figure 7 : toutes les électrodes de rang pair sont à -5 volts, et toutes les électrodes de rang impair sont à +5 volts. Les champs sont de sens opposés d'un pixel à l'autre mais ce qui compte c'est l'amplitude et non le sens du champ. On verra qu'on peut décomposer la phase d'effacement en deux demi-phases en appliquant aux électrodes des potentiels inversés d'une demi-phase à l'autre, ou même une succession d'inversions de potentiel.

Dans cette phase d'effacement, les molécules de cristal liquide tendent à s'aligner dans la direction du champ électrique donc dans la direction Ox. Les contre-électrodes et les électrodes de pixel sont maintenues en haute impédance pendant la phase d'effacement pour ne pas créer de champ perturbateur qui gênerait le réalignement des molécules dans la direction Ox.

Dans les paragraphes qui précèdent on a considéré qu'une paroi enfermant le cristal liquide était frottée de manière à donner aux molécules de cristal liquide une orientation au repos dans la direction Ox des contre-électrodes. Il est cependant préférable que l'orientation des molécules au repos soit légèrement inclinée par rapport à la direction Ox. Ainsi, lors de l'application d'un champ électrique E d'écriture entre l'électrode de pixel et la contre-électrode dans la direction Oy, les molécules vont tourner préférentiellement dans le sens le plus facile qui résulte de cette inclinaison de départ.

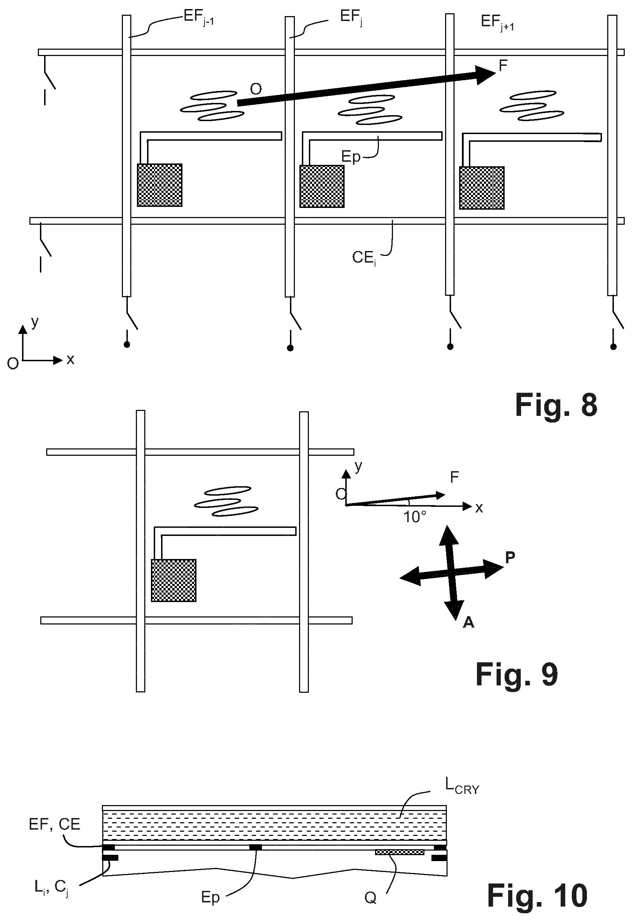

La figure 8 représente sous forme d'une flèche épaisse inclinée OF la direction des molécules au repos, donnée par le frottement de la paroi. Les molécules reprennent naturellement (mais lentement) cette orientation après la fin de la phase d'effacement de la figure 7, lorsqu'on cesse d'appliquer les potentiels de masse et Vdd aux contre-électrodes et qu'on les remet en haute impédance avant une nouvelle écriture.

L'angle d'inclinaison des molécules au repos peut être par exemple de 5 à 20°, de préférence 10°.

Les polariseurs croisés associés à la matrice de pixels seront de préférence orientés l'un dans la direction OF du frottement, l'autre dans la direction perpendiculaire au frottement (figure 9). Le polariseur placé du côté incident de la lumière est de préférence orienté dans la direction OF pour laisser passer vers le cristal liquide la lumière polarisée dans cette direction. L'analyseur placé du côté de la sortie est alors orienté dans la direction perpendiculaire.

Pour la simplicité du dessin des électrodes d'effacement on donne de préférence aux électrodes d'effacement une orientation dans la direction Oy parallèle aux colonnes de pixels même dans le cas où la direction de frottement est inclinée par rapport à la direction Ox des lignes. Toutefois, cela n'est pas obligatoire et on peut, si on accepte de compliquer le dessin des électrodes d'effacement, envisager que les électrodes d'effacement soient orientées perpendiculairement à la direction de frottement OF ; cela fait que le champ électrique d'effacement sera vraiment dans la direction des molécules au repos. Cela revient à donner à ces électrodes une allure générale en dents de scie : électrodes d'effacement inclinées perpendiculairement à OF mais s'étendant le long de la rangée de pixels dans la direction générale Oy. Les conducteurs de colonne suivent alors avantageusement ce dessin en dent de scie. Alternativement, on peut prévoir que la direction de frottement est parallèle aux lignes (ou colonnes de pixels) et que les contre-électrodes CE ont un dessin en dents de scie pour être inclinées avec une légère oblicité par rapport à la direction des lignes, l'électrode de pixel étant parallèle aux contre-électrodes, donc légèrement inclinée, de manière à produire un champ électrique qui n'est pas perpendiculaire à la direction de frottement Ox ; les électrodes d'effacement sont alors parallèles aux colonnes (Oy) et établissent un champ dans la direction de frottement.

La structure selon l'invention est particulièrement adaptée à une réalisation en technologie de microélectronique. L'afficheur est réalisé à partir d'une puce de circuit intégré en technologie LCOS et la fabrication est collective pour un lot d'afficheurs à partir d'une tranche de silicium.

La fabrication comporte la réalisation de toute la circuiterie sur le substrat de silicium, y compris les électrodes de pixel, les contre-électrodes et les électrodes d'effacement. Il n'est pas nécessaire de prévoir un post-process (après la mise en place du cristal liquide) pour le dépôt de ces électrodes, alors qu'il était nécessaire de le faire dans le cas d'une commande par un champ électrique vertical (perpendiculaire au plan du cristal liquide), surtout avec des électrodes d'oxyde d'indium-étain.

On s'arrangera en tous cas pour que toutes ces électrodes, qui commandent le cristal liquide en appliquant un champ électrique d'écriture ou d'effacement, soient disposées le plus près possible du cristal liquide. Par conséquent, en supposant que les électrodes soient formées sur la face avant d'un substrat de silicium, ces électrodes seront formées en utilisant si possible le dernier niveau de métallisation. Les conducteurs de ligne et de colonne doivent au contraire être réalisés dans des niveaux inférieurs car ils peuvent être plus éloignés du cristal liquide étant donné qu'ils ne doivent pas jouer de rôle d'application d'un champ électrique. La figure 10 montre schématiquement une vue en coupe dans laquelle les électrodes Ep, CE et EF sont les plus proches du cristal liquide, tandis que les conducteurs de ligne et colonne en sont plus éloignés. Une couche légèrement conductrice de l'électricité mais transparente peut être prévue sur la ou les parois qui enferment le cristal liquide, pour évacuer des charges électriques qui pourraient s'accumuler.

Si des électrodes de même niveau conducteur doivent se croiser, on utilisera de préférence des vias et des conducteurs de niveaux inférieurs pour réaliser le croisement sans court-circuit. C'est le cas par exemple pour les contre-électrodes qui s'étendent le long de toute une rangée (ligne ou colonne) de pixels et pour les électrodes d'effacement qui s'étendent perpendiculairement aux premières le long de toute une rangée (colonne ou ligne) perpendiculaire à la première.

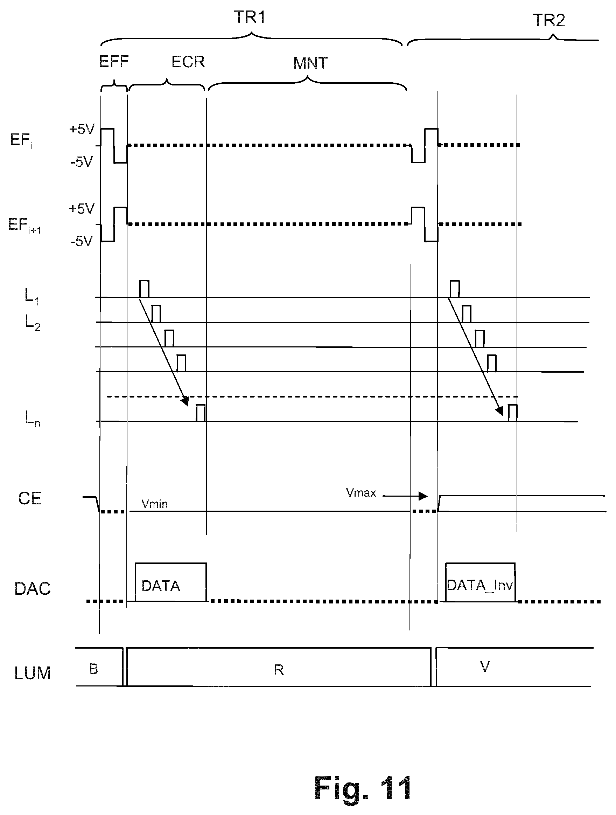

La figure 11 représente un diagramme temporel des signaux appliqués aux différentes électrodes (incluant les conducteurs d'adressage en ligne et les conducteurs de données en colonne) pendant les phases d'effacement, d'écriture, et de maintien. Ce diagramme est tracé en considérant qu'on est en mode séquentiel couleur ; deux trames successives TR1 et TR2 correspondent donc à des illuminations par des sources de lumière différentes, par exemple rouge (R) et verte ((V), une troisième trame correspondant à la couleur bleue (B) ; un pixel reçoit d'abord des informations de luminance correspondant à la première couleur et ensuite des informations de luminance correspondant à la deuxième couleur, etc.

Chaque trame comprend successivement une phase d'effacement EFF, une phase d'écriture ECR, et une phase de maintien MNT.

La phase d'effacement EFF, en début de chaque trame, peut consister à appliquer une tension négative aux électrodes d'effacement paires et une tension positive aux électrodes d'effacement impaires come cela a été expliqué en référence à la figure 7. On peut aussi prévoir que l'effacement se fait en deux demi-phases successives dans lesquelles une différence de potentiel d'un signe donné est appliquée entre deux électrodes adjacentes après quoi une différence de potentiel du signe inverse est appliquée entre ces mêmes électrodes. C'est cette dernière solution qui est adoptée dans le diagramme temporel représenté sur la figure 9. De plus, on prévoit dans cet exemple que pour deux électrodes données, le signe de la différence de potentiel pendant la première demi-phase d'effacement est inversé lorsqu'on change de trame.

La contre-électrode CE est maintenue en haute impédance pendant au moins une partie de la phase d'effacement (représentation de l'état haute impédance par une ligne pointillée épaisse sur la figure 11). L'électrode de pixel aussi est maintenue en haute impédance, de préférence pendant toute la phase d'effacement.

La phase d'effacement EFF est suivie d'une phase d'écriture ECR pendant laquelle les lignes de pixels sont écrites les unes après les autres. L'adressage d'une ligne de rang i consiste à appliquer une brève impulsion d'adressage sur le conducteur de ligne Lᵢ pour rendre conducteurs les transistors Q des pixels de cette ligne ; pendant ce temps, un niveau de luminance analogique désiré pour chaque pixel de cette ligne est appliqué sur le conducteur de colonne correspondant à cette ligne. Les impulsions d'adressage durent le temps nécessaire pour que les transistors de commande Q puissent charger le condensateur constitué par le pixel et éventuellement les capacités de stockage du circuit. Les impulsions se succèdent pour l'écriture des différentes lignes L₁ à Lₙ et ne se recouvrent pas de sorte que les transistors d'une seule ligne sont simultanément conducteurs.

Les données numériques DATA correspondant aux niveaux de gris à appliquer aux pixels des lignes successives sont converties et appliquées sous forme de tension analogique aux conducteurs de colonne en synchronisme avec la sélection des lignes correspondantes. Pendant ce temps, la contre-électrode est portée à un potentiel fixe, désigné par Vmin. La tension analogique représentant la luminance est donc référencée par rapport à ce niveau Vmin pendant la trame TR1.

Cependant, pendant la trame suivante TR2, le niveau de référence de la contre électrode est de préférence modifié pour devenir Vmax comme on le voit sur la figure 11. Les données numériques définissant la luminance sont alors inversées pour que la tension analogique produite soit bien référencée par rapport à Vmax, et ceci est symbolisé sur la figure 11 par l'appellation "DATA_inv" pour les données de luminance de la deuxième trame TR2.

Dans un exemple numérique, les tensions Vmin et Vmax sont de - 1,5 volt et +1,5 volts respectivement.

Pendant la phase d'écriture, les électrodes d'effacement EFᵢ, EFᵢ₊₁ sont maintenues en état de haute impédance, comme indiqué par les traits pointillés épais de la figure 11.

La phase de maintien MNT dure toute la fin de la trame après la fin de la phase d'écriture. Pendant cette phase, les niveaux de tension analogiques représentant les luminances ne sont plus appliqués aux transistors mais ces niveaux sont conservés sur les électrodes de pixels du fait de la capacité propre de chaque cellule à cristal liquide ou du fait d'une capacité auxiliaire de stockage placée en parallèle entre chaque électrode de pixel et la contre-électrode. Les électrodes de pixel Ep sont donc en haute impédance, et ceci est représenté symboliquement sur la figure 11 par le trait pointillé épais présent entre deux écritures successives de données DATA.

Les électrodes d'effacement restent en haute impédance pendant la phase de maintien comme elles l'étaient pendant la phase d'écriture.

On peut prévoir qu'à la fin d'une trame on ramène à zéro la valeur du signal de luminance sur toutes les électrodes de pixel, soit ligne par ligne soit de préférence toutes à la fois, avant de procéder à la phase d'effacement. On minimise ainsi la tension donc le champ électrique entre les électrodes de pixel et la contre-électrode (qui tend à conserver bien qu'elle soit en haute impédance le potentiel qu'elle avait pendant la phase de maintien). Cela facilite le retour à la position de repos des molécules de cristal liquide. Le niveau zéro ainsi appliqué à toutes les électrodes est référencé par rapport au niveau qu'avait la contre-électrode dans la trame qui se termine par cette phase d'effacement.

A la fin de la phase d'effacement, on peut effectuer la commutation de source lumineuse (ligne LUM de la figure 11) ; l'écran à cristaux liquides est de préférence de type "normalement noir", c'est-à-dire qu'il ne laisse pas passer la lumière en l'absence de champ électrique entre une électrode de pixel et la ou les contre-électrodes, et c'est pourquoi la commutation de source lumineuse à la fin de la phase d'effacement est bien adaptée.

Dans un exemple numérique, la durée d'une trame est de 8 millisecondes (24 millisecondes pour une succession de trois trames de couleurs primaires rouge vert bleu) ; la durée de la phase d'effacement peut être de 1 milliseconde ; la durée de la phase d'écriture peut être d'une à deux microsecondes donc 1 à 10 microsecondes selon le nombre de lignes ; la durée de la phase de maintien sera globalement de 5 à 7 millisecondes ; des phases de ré-écriture peuvent cependant être prévues pendant cette durée pour assurer le maintien du signal, notamment si la capacité de stockage est petite.

En résumé, parmi les avantages de l'invention, on peut mentionner :
- la possibilité de mieux fonctionner en mode séquentiel couleur à une cadence normale de 24 images en couleurs par seconde ;
- la réduction des coûts de fabrication par la suppression des couches d'oxyde d'indium-étain ;
- la suppression des étapes de dépôt et gravures de couches en post-process, c'est-à-dire après le report du substrat de circuit intégré comprenant la matrice active sur un substrat transparent destiné à recevoir le cristal liquide ;
- une très bonne performance en termes d'angle de vue, due en particulier au fait que les molécules de cristal liquide restent orientées dans le plan de la matrice même en présence d'un champ électrique ;
- l'absence de besoin de films de compensation d'angle de vue ;
- la possibilité de travailler en mode normalement noir
- un noir peu sensible à l'angle de vue et à la couleur de la source lumineuse.

## Revendications

1. Afficheur à cristal liquide comprenant une matrice de rangées horizontales et verticales de pixels et, pour chaque pixel, une cellule à cristal liquide (CL), une électrode de pixel (Ep) commandée par un transistor de commande (Q) et au moins deux contre-électrodes (CE) situées du même côté du cristal liquide que l'électrode de pixel, le cristal liquide étant composé de molécules ayant une orientation naturelle de repos dans le plan de l'afficheur en l'absence de tension entre l'électrode de pixel et les contre-électrodes et une autre orientation dans le plan de l'afficheur en présence d'une tension entre l'électrode de pixel et les contre-électrodes, cet afficheur comportant en outre un réseau d'électrodes d'effacement (EFⱼ) et des moyens pour appliquer entre deux électrodes d'effacement voisines, pendant une phase d'effacement, un champ électrique d'effacement dans un sens tendant à ramener les molécules du cristal liquide vers leur orientation de repos, les contre-électrodes étant parallèles à l'électrode de pixel et communes à tous les pixels d'une rangée horizontale, **caractérisé en ce que** chaque électrode d'effacement s'étend le long d'une rangée verticale de pixels et est commune aux pixels de cette rangée verticale, et **en ce que** l'afficheur comporte des moyens pour afficher des trames d'image successives, chaque trame comprenant :
- une phase d'effacement pendant laquelle une différence de potentiel est appliquée entre deux électrodes d'effacement encadrant un pixel ;
- une phase d'écriture d'image, pendant laquelle les électrodes d'effacement sont maintenues en haute impédance, les contre-électrodes sont maintenues à un potentiel de référence, et une tension analogique représentant la luminance est appliquée à l'électrode de pixel,
- et une phase de maintien pendant laquelle les électrodes d'effacement, l'électrode de pixel sont placées en haute impédance, et les contre-électrodes sont maintenues au potentiel de référence.

2. Afficheur selon la revendication 1, **caractérisé en ce que** le réseau d'électrodes d'effacement est situé du même côté du cristal liquide que l'électrode de pixel et la contre-électrode.

3. Afficheur selon la revendication 2, **caractérisé en ce qu'**il y a deux électrodes d'effacement (EFⱼ, EFⱼ₊₁) pour chaque rangée verticale de pixels, une de chaque côté du pixel, et le champ électrique d'effacement est établi en portant à des potentiels différents les électrodes d'effacement qui encadrent le pixel.

4. Afficheur selon la revendication 3, **caractérisé en ce que** les deux électrodes d'effacement communes à tous les pixels d'une même rangée verticale de pixels sont partagées entre deux rangées adjacentes, et les contre-électrodes communes à tous les pixels d'une même rangée horizontale sont partagées entre deux rangées horizontales adjacentes.

5. Afficheur selon l'une des revendications 1 à 4, **caractérisé en ce que** la matrice comporte des conducteurs d'adressage en ligne et des conducteurs de données de luminance en colonne, et **en ce que** les électrodes d'effacement, les électrodes de pixel et les contre-électrodes sont réalisées dans un dernier niveau de métal conducteur, plus proche du cristal liquide que les niveaux de métal conducteur utilisés pour les conducteurs d'adressage en ligne et les conducteurs de données de luminance.

6. Afficheur selon la revendication 5, **caractérisé en ce que** l'électrode d'effacement est superposée à un conducteur d'adressage en ligne du pixel ou à un conducteur de donnée de luminance en colonne, et **en ce que** les contre-électrodes sont superposées à un conducteur de colonne ou à un conducteur d'adressage en ligne.

7. Afficheur selon l'une des revendications 1 à 6, **caractérisé en ce que** les électrodes de pixel, les électrodes d'effacement et les contre-électrodes sont réalisées en un métal conducteur non transparent tel que du cuivre ou de l'aluminium.

8. Afficheur selon l'une des revendications 1 à 7, **caractérisé en ce que** les électrodes d'effacement sont perpendiculaires aux contre-électrodes ou à la direction des molécules au repos.

9. Afficheur selon l'une des revendications 1 à 8, **caractérisé en ce que** l'orientation des molécules de cristal liquide au repos est décalée angulairement de 5° à 20° par rapport à la direction de l'électrode de pixel et de la contre-électrode, afin de favoriser un sens de rotation déterminé des molécules lorsqu'on applique un champ électrique d'écriture perpendiculairement à l'électrode de pixel et à la contre-électrode.

10. Afficheur selon une des revendications 1 à 9, **caractérisé en ce que** la matrice active est réalisée à partir d'un substrat semiconducteur, et **en ce qu'**il comprend des moyens de synchronisation avec la commande de sources lumineuses colorées pour un fonctionnement en mode séquentiel couleur.

11. Afficheur selon la revendication 10, **caractérisé en ce qu'**il est de type transmissif.

12. Afficheur selon l'une des revendications 1 à 11, **caractérisé en ce qu'**il comporte des moyens pour maintenir l'électrode de pixel et les contre-électrodes en haute impédance pendant au moins une partie de la phase d'effacement.

13. Afficheur selon l'une des revendications 1 à 12, **caractérisé en ce qu'**il comporte des moyens pour commander les électrodes d'effacement de deux rangées verticales adjacentes en au moins deux phases pour établir un champ électrique de sens alterné entre ces électrodes pendant une phase d'effacement.

14. Afficheur selon l'une des revendications 1 à 13, **caractérisé en ce que** les électrodes d'effacement sont réunies électriquement en deux groupes d'électrodes interdigitées, pour un effacement commun de toute la matrice, un champ électrique s'établissant entre deux électrodes voisines appartenant l'une au premier groupe, l'autre au deuxième groupe.

## Patentansprüche

1. Flüssigkristallanzeige, die eine Matrix von horizontalen und vertikalen Pixelreihen und, für jedes Pixel, eine Flüssigkristallzelle (CL), eine von einem Steuertransistor (Q) gesteuerte Pixelelektrode (Ep) und wenigstens zwei Gegenelektroden (CE) umfasst, die sich auf derselben Seite des Flüssigkristalls befinden wie die Pixelelektrode, wobei der Flüssigkristall aus Molekülen mit einer natürlichen Ruheorientierung in der Ebene der Anzeige in Abwesenheit von Spannung zwischen der Pixelelektrode und den Gegenelektroden und einer anderen Orientierung in der Ebene der Anzeige in Anwesenheit von Spannung zwischen der Pixelelektrode und den Gegenelektroden zusammengesetzt ist, wobei die Anzeige ferner eine Anordnung von Löschelektroden (EFⱼ) und Mittel zum Anlegen, während einer Löschphase, eines elektrischen Löschfeldes zwischen zwei benachbarten Löschelektroden in einer Richtung, die dazu neigt, die Moleküle des Flüssigkristalls in ihre Ruheorientierung zurückzubringen, umfasst, wobei die Gegenelektroden parallel zu der Pixelelektrode und allen Pixeln einer horizontalen Reihe gemeinsam sind, **dadurch gekennzeichnet, dass** jede Löschelektrode entlang einer vertikalen Pixelreihe verläuft und den Pixeln dieser vertikalen Reihe gemeinsam ist, und dadurch, dass die Anzeige Mittel zum Anzeigen von aufeinander folgenden Bildframes umfasst, wobei jeder Frame Folgendes umfasst:
eine Löschphase, in der eine Potentialdifferenz zwischen zwei ein Pixel einrahmenden Löschelektroden angelegt wird;
eine Bildschreibphase, in der die Löschelektroden auf einer hohen Impedanz gehalten werden, die Gegenelektroden auf einem Referenzpotential gehalten werden und eine die Luminanz repräsentierende analoge Spannung an die Pixelelektrode angelegt wird; und
eine Haltephase, in der die Löschelektroden und die Pixelelektrode auf eine hohe Impedanz gesetzt und die Gegenelektroden auf dem Referenzpotential gehalten werden.

2. Anzeige nach Anspruch 1, **dadurch gekennzeichnet, dass** sich die Anordnung von Löschelektroden auf derselben Seite des Flüssigkristalls befindet wie die Pixelelektrode und die Gegenelektrode.

3. Anzeige nach Anspruch 2, **dadurch gekennzeichnet, dass** es zwei Löschelektroden (EFᵢ, EFⱼ₊₁) für jede vertikale Pixelreihe gibt, eine auf jeder Seite des Pixels, und das elektrische Löschfeld erzeugt wird, indem die das Pixel einrahmenden Löschelektroden auf unterschiedliche Potentiale gebracht werden.

4. Anzeige nach Anspruch 3, **dadurch gekennzeichnet, dass** die beiden allen Pixeln derselben vertikalen Pixelreihe gemeinsamen Löschelektroden zwischen zwei Nachbarreihen gemeinsam genutzt werden und die allen Pixeln derselben horizontalen Reihe gemeinsamen Gegenelektroden zwischen zwei horizontalen Nachbarreihen gemeinsam genutzt werden.

5. Anzeige nach einem der Ansprüche 1 bis 4, **dadurch gekennzeichnet, dass** die Matrix Reihenaddressierleiter und Spaltenluminanzdatenleiter umfasst, und dadurch, dass die Löschelektroden, die Pixelelektroden und die Gegenelektroden auf einem letzten Leitermetallniveau, das näher am Flüssigkristall ist als die für die Reihenaddressierleiter und die Luminanzdatenleiter benutzten Leitermetallniveaus, realisiert werden.

6. Anzeige nach Anspruch 5, **dadurch gekennzeichnet, dass** die Löschelektrode auf einen Reihenadressierleiter des Pixels oder einen Spaltenluminanzdatenleiter gelegt wird, und dadurch, dass die Gegenelektroden auf einen Spaltenleiter oder auf einen Reihenadressierleiter gelegt sind.

7. Anzeige nach einem der Ansprüche 1 bis 6, **dadurch gekennzeichnet, dass** die Pixelelektroden, die Löschelektroden und die Gegenelektroden aus einem nichttransparenten leitenden Material wie Kupfer oder Aluminium gefertigt sind.

8. Anzeige nach einem der Ansprüche 1 bis 7, **dadurch gekennzeichnet, dass** die Löschelektroden senkrecht zu den Gegenelektroden oder zur Richtung der Moleküle im Ruhezustand sind.

9. Anzeige nach einem der Ansprüche 1 bis 8, **dadurch gekennzeichnet, dass** die Orientierung der Flüssigkristallmoleküle im Ruhezustand winkelmäßig um 5° bis 20° in Bezug auf die Richtung der Pixelelektrode und der Gegenelektrode versetzt sind, um eine vorbestimmte Rotationsrichtung der Moleküle zu unterstützen, wenn ein elektrisches Schreibfeld senkrecht zur Pixelelektrode und zur Gegenelektrode angelegt wird.

10. Anzeige nach einem der Ansprüche 1 bis 9, **dadurch gekennzeichnet, dass** die aktive Matrix von einem Halbleitersubstrat realisiert wird, und dadurch, dass sie Mittel zum Synchronisieren mit der Steuerung von Farblichtquellen für einen Betrieb im sequentiellen Farbmodus umfasst.

11. Anzeige nach Anspruch 10, **dadurch gekennzeichnet, dass** sie vom transmissiven Typ ist.

12. Anzeige nach einem der Ansprüche 1 bis 11, **dadurch gekennzeichnet, dass** sie Mittel zum Halten der Pixelelektrode und der Gegenelektroden auf einer hohen Impedanz während wenigstens einem Teil der Löschphase umfasst.

13. Anzeige nach einem der Ansprüche 1 bis 12, **dadurch gekennzeichnet, dass** sie Mittel zum Steuern der Löschelektroden von zwei benachbarten vertikalen Reihen in wenigstens zwei Phasen zum Erzeugen eines elektrischen Wechselrichtungsfeldes zwischen diesen Elektroden während einer Löschphase umfasst.

14. Anzeige nach einem der Ansprüche 1 bis 13, **dadurch gekennzeichnet, dass** die Löschelektroden elektrisch zu zwei interdigitalisierten Elektrodengruppen zum gemeinsamen Löschen der gesamten Matrix geschaltet sind, wobei ein elektrisches Feld zwischen zwei benachbarten Elektroden entsteht, von denen eine zur ersten Gruppe und die andere zur zweiten Gruppe gehört.

## Claims

1. A liquid crystal display comprising a matrix of horizontal and vertical rows of pixels and, for each pixel, a liquid crystal cell (CL), a pixel electrode (Ep) controlled by a control transistor (Q) and at least two counter electrodes (CE) located on the same side of the liquid crystal as said pixel electrode, said liquid crystal being made up of molecules having a natural rest orientation in the plane of said display in the absence of voltage between said pixel electrode and said counter electrodes and another orientation in the plane of said display when a voltage is present between said pixel electrode and said counter electrodes, said display further comprising an array of erase electrodes (EFⱼ) and means for applying, during an erase phase, an electric erase field between two neighbouring erase electrodes in a direction that tends to return the molecules of said liquid crystal to their rest orientation, said counter electrodes being parallel to said pixel electrode and common to all of the pixels of a horizontal row, **characterised in that** each erase electrode extends along a vertical row of pixels and is common to the pixels of said vertical row, and **in that** said display comprises means for displaying successive image frames, each frame comprising:
an erase phase, during which a potential difference is applied between two erase electrodes framing a pixel;
an image write phase, during which said erase electrodes are held at a high impedance, said counter electrodes are held at a reference potential and an analogue voltage representing the luminance is applied to said pixel electrode; and
a hold phase, during which said erase electrodes and said pixel electrode are placed at a high impedance, and said counter electrodes are held at the reference potential.

2. The display according to claim 1, **characterised in that** said array of erase electrodes is located on the same side of said liquid crystal as said pixel electrode and said counter electrode.

3. The display according to claim 2, **characterised in that** there are two erase electrodes (EFᵢ, EFⱼ₊₁) for each vertical row of pixels, one on each side of said pixel, and the electric erase field is established by bringing the erase electrodes framing said pixel to different potentials.

4. The display according to claim 3, **characterised in that** the two erase electrodes common to all of the pixels of the same vertical row of pixels are shared between two adjacent rows, and the counter electrodes common to all of the pixels of the same horizontal row are shared between two adjacent horizontal rows.

5. The display according to any one of claims 1 to 4, **characterised in that** said matrix comprises addressing row conductors and luminance data column conductors, and **in that** said erase electrodes, said pixel electrodes and said counter electrodes are formed within a final level of conducting metal, closer to said liquid crystal than the levels of conducting metal that are used for said addressing row conductors and said luminance data conductors.

6. The display according to claim 5, **characterised in that** said erase electrode is superposed on an addressing row conductor of said pixel or on a luminance data column conductor, and **in that** said counter electrodes are superposed on a column conductor or on an addressing row conductor.

7. The display according to any one of claims 1 to 6, **characterised in that** said pixel electrodes, said erase electrodes and said counter electrodes are made of a non-transparent conducting metal such as copper or aluminium.

8. The display according to any one of claims 1 to 7, **characterised in that** said erase electrodes are perpendicular to said counter electrodes or to the direction of the molecules at rest.

9. The display according to any one of claims 1 to 8, **characterised in that** the orientation of the liquid crystal molecules at rest is angularly offset by 5° to 20° relative to the direction of said pixel electrode and of said counter electrode, so as to promote a determined direction of rotation of the molecules when an electric write field is applied perpendicular to said pixel electrode and to said counter electrode.

10. The display according to any one of claims 1 to 9, **characterised in that** the active matrix is produced from a semi-conducting substrate, and **in that** it comprises means for synchronising with the control of coloured luminous sources for operation in a colour sequential mode.

11. The display according to claim 10, **characterised in that** it is of the transmissive type.

12. The display according to any one of claims 1 to 11, **characterised in that** it comprises means for holding said pixel electrode and said counter electrodes at a high impedance for at least part of said erase phase.

13. The display according to any one of claims 1 to 12, **characterised in that** it comprises means for controlling the erase electrodes of two adjacent vertical rows in at least two phases for establishing an alternate direction electric field between said electrodes during an erase phase.

14. The display according to any one of claims 1 to 13, **characterised in that** said erase electrodes are electrically connected to two groups of inter-digitised electrodes for commonly erasing the entire matrix, with an electric field being established between two neighbouring electrodes, one of which belongs to said first group and the other of which belongs to said second group.
